(19) Europäisches Patentamt
European Patent Office
Office européen des brevets

(11) **EP 0 766 374 B1**

(12) **EUROPÄISCHE PATENTSCHRIFT**

(45) Veröffentlichungstag und Bekanntmachung des Hinweises auf die Patenterteilung:
**29.08.2001 Patentblatt 2001/35**

(51) Int Cl.⁷: **H02M 7/162**

(21) Anmeldenummer: **96114845.9**

(22) Anmeldetag: **16.09.1996**

(54) **Einrichtung zur Gleichstromversorgung**

DC power supply device

Dispositif d'alimentation en courant continu

(84) Benannte Vertragsstaaten:
**AT CH DE FR GB IT LI SE**

(30) Priorität: **29.09.1995 DE 19536545**

(43) Veröffentlichungstag der Anmeldung:
**02.04.1997 Patentblatt 1997/14**

(73) Patentinhaber: **SIEMENS AKTIENGESELLSCHAFT**
**80333 München (DE)**

(72) Erfinder:
• **Schnapperelle, Jochen, Dipl.-Ing.**
**91096 Möhrendorf (DE)**
• **Frankenberg, Wolfgang, Dipl.-Ing.**
**91054 Erlangen (DE)**

(56) Entgegenhaltungen:
EP-A- 0 622 974          DE-A- 3 603 120
DE-A- 4 343 899          US-A- 4 725 939

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Einrichtung zur Gleichstromversorgung eines elektrischen Schmelzaggregats, insbesondere eines Lichtbogenofens.

Bei solchen Einrichtungen ist mindestens ein Transformator vorhanden, dessen Primärwicklung mit Drehstrom versorgt wird, und der mindestens eine Sekundärwicklung aufweist, die mit mehreren Brückenzweigen eines Gleichrichters verschaltet ist und die Drehstrom an einen Gleichrichter abgibt, der am Ausgang eine gleichgerichtete Spannung und einen gleichgerichteten Strom an die Last abgibt, wobei die Brückenzweige für jede Sekundärwicklung aus zumindest je zwei gesteuerten Halbleitern je Phase aufgebaut sind, deren Steuerwinkel unterschiedlich steuerbar sind.

Aus der EP 0 622 974 A1 ist ein Leistungsumrichter zur Gleichstromversorgung von Lichtbogenöfen bekannt, der die aufgenommene Blindleistung in etwa konstant hält. Dieser bekannte Leistungsumrichter zur Gleichstromversorgung eines Lichtbogenofens weist einen Drehstromtransformator auf, dessen Sekundärwicklung mit gesteuerten Halbleitern verschaltet ist. Die Steuerwinkel, die in funktionaler Abhängigkeit zur abgegebenen Gleichspannung einerseits und der aufgenommenen Blindleistung andererseits stehen, werden bereits mit variablen Zündwinkeln getriggert, um die Leitungsdauer in einer zugeordneten Freilaufschaltung zu erhöhen.

Bestimmendes Merkmal des bekannten Gleichrichters aus der EP 0 622 974 A1 ist also die Freilaufschaltung mit zwei Freilaufzweigen, mit denen die Blindlast vermindert werden soll. Dazu sind Freilaufzweige mit dem Sternpunkt der Sekundärwicklung des Transformators verbunden. Mit dieser Lösung zur Blindleistungsverringerung sind verschiedene Nachteile verbunden. Zum einen muß der Sternpunkt der Sekundärwicklung herausgeführt werden und voll belastbar sein. Auf diese Weise wird nicht nur die Baugröße des Transformators erhöht, sondern auch die Kosten für einen derartigen Transformator. Als weiterer Nachteil ist die Verwendung des Freilaufkreises an sich anzusehen. Da dieser zum Teil den gesamten Strom des Gleichrichters, der im Bereich von 40000 A liegen kann, führen muß, ist seine Ausführung sehr aufwendig. Er ist üblicherweise kostenaufwendig durch mehrere parallelgeschaltete gekühlte Dioden auszuführen. Die zusätzlichen konstruktiven Merkmale, wie der voll belastbare aus der Sekundärwicklung herausgeführte Sternpunkt sowie der Freilaufkreis, führen nicht nur zu höheren Kosten, sondern auch zu einer Herabsetzung der Zuverlässigkeit und damit der Verfügbarkeit des Gleichrichters.

Vom Stand der Technik sind bereits auch Einrichtungen ohne Freilaufzweige bekannt. Dabei wird jedoch keine Minimierung der Blindleistungsaufnahme erreicht.

In der DE 36 03 120 A1 ist ein Stromrichter beschrieben, der aus einem Mehrfach-Verbindungssystem besteht. Innerhalb derselben Dreiphasen-Thyristorbrücke können drei verschiedene Steuerwinkel dadurch realisiert werden, daß die Phasenfolge beim Anschließen der Brückeneinheiten an die Wechselstromquelle vertauscht wird. Damit ist eine asymmetrische Steuerung der Brückenschaltung möglich.

Aufgabe der Erfindung ist es demgegenüber, einen Gleichrichter für ein elektrisches Schmelzaggregat, z.B. für einen Lichtbogenofen, anzugeben, mit dem die Spannungsschwankungen, verursacht durch Wirk- und Blindleistungsschwankungen, sowie der Blindleistungsbedarf minimiert und trotzdem ein optimaler Ofenbetrieb ermöglicht werden soll. Dabei soll der konstruktive Aufwand gegenüber dem Stand der Technik verringert und somit die Kosten für einen derartigen Gleichrichter gesenkt und seine Zuverlässigkeit erhöht werden.

Die Aufgabe wird erfindungsgemäß durch eine Einrichtung der Gesamtheit der Merkmale des Patentanspruches 1 gelöst. Weiterbildungen sind in den abhängigen Ansprüchen angegeben.

Bei der Erfindung ist die Einrichtung zur Gleichstromversorgung, die Steuerwinkel, insbesondere $\alpha_1$ und $\alpha_2$, aus der funktionalen Abhängigkeit zwischen abgegebener Gleichspannung, der Spannung zwischen je zwei Phasen und den Steuerwinkeln, insbesondere $\alpha_1$ und $\alpha_2$, einerseits sowie der funktionalen Abhängigkeit zwischen der Sollblindleistung, dem erzeugten Gleichstrom, der Spannung zwischen zwei Phasen sowie den Steuerwinkeln, insbesondere $\alpha_1$ und $\alpha_2$, andererseits ermittelnd ausgebildet. Dabei werden die Steuerwinkel erfindungsgemäß in einer Recheneinheit aus

$$U_d = \frac{1,35}{2} U_L (\cos \alpha_1 + \cos \alpha_2) \qquad (1)$$

und

$$\frac{Q_{soll}}{1,35 U_L \cdot I_d} = \frac{Q_{soll,rel}}{100\%} = \frac{1}{2}(\sin \alpha_1 + \sin \alpha_2) \qquad (2)$$

durch Lösung des aus letzteren Beziehungen gebildeten Gleichungssystems mit zwei Gleichungen und zwei Unbekannten bestimmt. In den Gleichungen (1) und (2) bezeichnet $U_d$ die erzeugte Gleichspannung, $U_L$ den Effektivwert der Wechselspannung zwischen je zwei Phasen, $Q_{soll,rel}$ den relativen Sollanteil der Blindleistung in Prozent und $I_d$ den Gleichstrom. Obige Gleichungen wurden speziell für dreipulsig wirkende Gleichrichter abgeleitet. Für sechspulsig oder auch zwölfpulsig wirkende Gleichrichter gilt Entsprechendes, wobei sich Steuerwinkel $\alpha_{ikl}$ gruppenweise zusammenfassen lassen.

Bei der Erfindung ergibt sich gegenüber dem aus der EP 0 622 974 A1 bekannten Leistungsumrichter mit Freilaufzweigen, die die aufgenommene Blindleistung in etwa konstant halten, eine deutlich günstigere und zuverlässigere Ausführung einer Einrichtung zur Gleichstromversorgung für elektrische Schmelzaggregate. Zum einen kann bei der erfindungsgemäßen Einrichtung zur Gleichstromversorgung auf die aufwendige Freilaufschaltung verzichtet werden, zum anderen ist es nicht notwendig, aus dem Transformator einen voll belastbaren Sternpunkt herauszuführen.

In einer vorteilhaften Ausgestaltung der erfindungsgemäßen Einrichtung zur Gleichstromversorgung ist die Recheneinheit als hochverfügbare Recheneinheit zur Ermittlung der Steuerwinkel oder Abruf der Steuerwinkel aus einer hinterlegten Tabelle ausgebildet. Auf diese Weise ist es möglich, durch die Steuerwinkel in geeigneter Weise on-line die durch Impedanzschwankungen verursachten Schwankungen der Blindleistung, die durch den Schmelzvorgang insbesondere bei einem Lichtbogenofen hervorgerufen werden, zu minimieren.

In einer weiteren vorteilhaften Ausgestaltung der Erfindung ist die Einrichtung zur Gleichstromversorgung die Blindleistung an einem ausgewählten Punkt in einem Bereich zwischen 40 und 80 % der Leerlaufgleichspannung, insbesondere zwischen 50 und 70 %, konstant haltend ausgebildet.

Weitere Vorteile und erfinderische Einzelheiten ergeben sich aus der nachfolgenden Beschreibung von Ausführungsbeispielen, anhand der Zeichnungen und in Verbindung mit den Unteransprüchen. Im einzelnen zeigen:

Figur 1    die Prinzipschaltung einer Einrichtung zur Gleichstromversorgung,

Figur 2    eine sechspulsig wirkende erfindungsgemäße Einrichtung zur Gleichstromversorgung,

Figur 3    eine zwölfpulsig wirkende erfindungsgemäße Einrichtung zur Gleichstromversorgung.

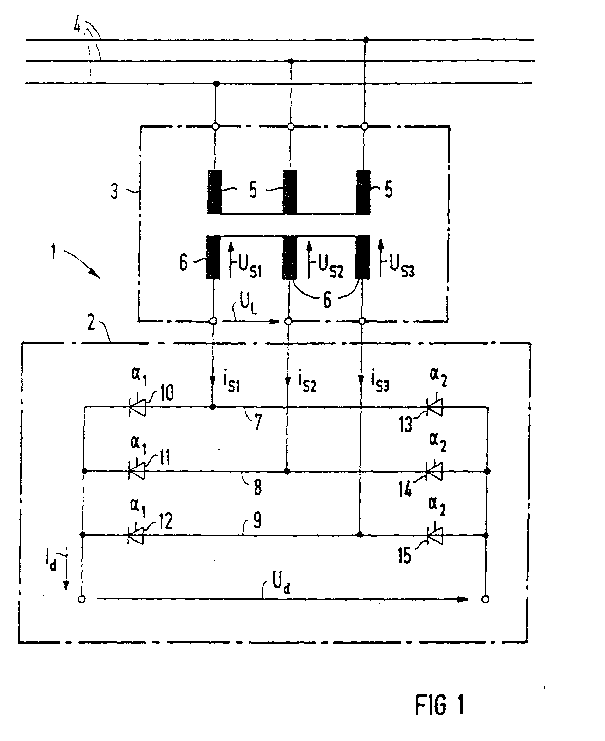

Figur 1 zeigt die Prinzipschaltung einer erfindungsgemäßen Einrichtung zur Gleichstromversorgung 1. Diese weist einen Gleichrichter 2 und einen Transformator 3 auf. Der Transformator 3 ist als Drehstromtransformator mit einer dreiphasigen Primärwicklung 5, die an einem Energieversorgungsnetz 4 anliegt, und einer dreiphasigen Sekundärwicklung 6 ausgebildet. Zwischen den einzelnen Phasen auf der Sekundärseite liegt eine Wechselspannung mit dem Effektivwert $U_L$ an. Jede Sekundärphase ist mit einem Brückenzweigpaar 7, 8 oder 9 verschaltet. Jedes Brückenzweigpaar 7, 8 oder 9 weist je zwei Halbleiter (Thyristoren) 10, 11 oder 12 bzw. 13, 14 oder 15 oder bei Parallelschaltung deren Vielfache auf. Die Halbleiter 10, 11 und 12 werden mit dem Steuerwinkel $\alpha_1$ und die Halbleiter 13, 14, 15 werden mit dem Steuerwinkel $\alpha_2$ angesteuert. Mit $I_d$ ist der vom Gleichrichter gelieferte Gleichstrom bezeichnet und mit $U_d$ die vom Gleichrichter gelieferte

Gleichspannung.

Die Steuerwinkel $\alpha_1$ und $\alpha_2$ werden über die Beziehungen

$$U_d = \frac{1{,}35}{2} U_L (\cos \alpha_1 + \cos \alpha_2) \qquad (1)$$

und der Beziehung

$$\frac{Q_{soll,rel}}{100\%} \approx 12(\sin \alpha_1 + \sin \alpha_2) \qquad (2),$$

die ein Gleichungssystem mit zwei Gleichungen und zwei Unbekannten bilden, ermittelt. Dabei bezeichnet $Q_{soll,rel}$ in Gleichung (2) den relativen Sollanteil der Blindleistung in Prozent bezogen auf die ideelle Gleichstromleistung 1,35 $U_L$ $I_d$. Durch die unterschiedliche Ansteuerung der Steuerwinkel ($\alpha_1$ und $\alpha_2$) der Brückenhälften wirkt der Gleichrichter 2 als dreipulsiger Gleichrichter.

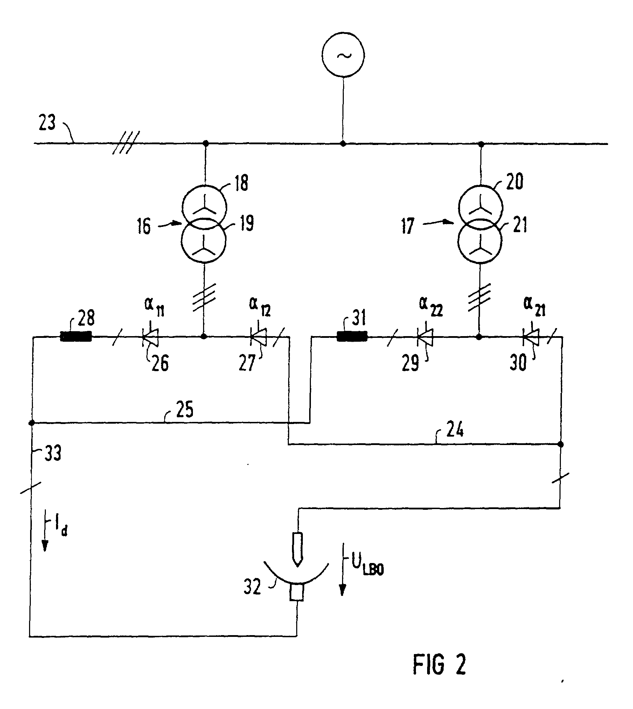

Figur 2 zeigt eine erfindungsgemäße sechspulsig wirkende Einrichtung zur Gleichstromversorgung. Diese weist zwei Transformatoren 16 und 17 und zwei dreipulsige Gleichstromzweige 24 und 25 auf. Die Transformatoren 16 und 17 sind in der beispielhaften Ausgestaltung als Drehstromtransformatoren in Sternschaltung ausgebildet. Sie liegen mit ihren Primärwicklungen 18 und 20 an einem Energieversorgungsnetz 23, in diesem Fall einem Mittelspannungsnetz. Die Sekundärwicklungen 19 und 21 der Transformatoren 16 und 17 sind mit je einem dreipulsig wirkenden Gleichrichter, wie in Figur 1 detailliert ausgeführt, verschaltet. Jeder Gleichrichter ist Teil eines Gleichstromzweiges 24 und 25. Jeder Gleichstromzweig 24 und 25 weist je zwei Brückenhälften 26 und 27 bzw. 29 und 30 mit Halbleitern (Thyristoren) sowie je eine Drosselspule 28 bzw. 31 auf. Die beiden dreipulsigen Gleichstromzweige 24 und 25 sind im Gleichstromkreis 33 parallel geschaltet. Die Drosselspulen 28 und 31 dienen u.a. der kurzzeitigen Kurzschlußstrom-Begrenzung und der Glättung von Stromschwankungen, die auf die Impedanzschwankungen beim Schmelzvorgang im Lichtbogenofen 32 zurückzuführen sind. Die Steuerwinkel $\alpha_{11}$, $\alpha_{12}$, $\alpha_{21}$ und $\alpha_{22}$ werden derartig eingestellt, daß die Blindleistung weitgehend konstant bleibt. Die vier Steuerwinkel $\alpha_{11}$, $\alpha_{12}$, $\alpha_{21}$ und $\alpha_{22}$ stellen vier Freiheitsgrade dar. Von diesen vier Freiheitsgraden werden zwei Freiheitsgrade dazu benutzt, die Blindleistung konstant zu halten und die verbleibenden zwei Freiheitsgrade um die beiden dreipulsigen Halbleiterzweige 24 und 25 gegeneinander um 180° in der Phase zu verschieben. Auf diese Weise ist es möglich, mit zwei baugleichen Transformatoren 16 und 17 und dreipulsigen Teilgleichströmen einen sechspulsigen Gesamtgleichstrom zu erhalten. Die Phasenverschiebung um 180° wird dadurch erreicht, daß für $\alpha_{11}$ und $\alpha_{21}$ bzw. für $\alpha_{12}$ und $\alpha_{22}$ nahezu identische Werte gewählt werden. Die Unterschiede zwi-

schen $\alpha_{11}$ und $\alpha_{21}$ auf der einen und $\alpha_{12}$ und $\alpha_{22}$ auf der anderen Seite werden derart gewählt, daß die Ströme in den Gleichstromzweigen 24 und 25 im Mittel gleich sind.

Die Steuerwinkel $\alpha_{11}$ und $\alpha_{21}$ bzw. $\alpha_{12}$ und $\alpha_{22}$ werden dabei in analoger Weise wie die Steuerwinkel $\alpha_1$ und $\alpha_2$ für einen dreipulsig wirkenden Gleichrichter, wie er in Figur 1 beschrieben ist, ermittelt.

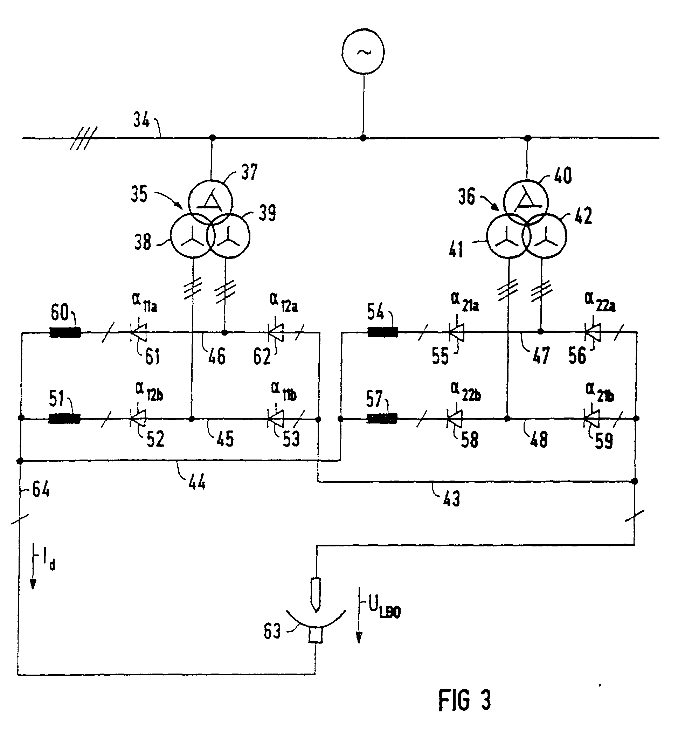

Figur 3 zeigt eine zwölfpulsig wirkende erfindungsgemäße Einrichtung zur Gleichstromversorgung. Diese weist in der beispielhaften Ausgestaltung zwei Drehstromtransformatoren 35 und 36 mit je einer Primärwicklung 37 bzw. 40 sowie je zwei Sekundärwicklungen 38 und 39 bzw. 41 und 42 auf. Die Primärwicklungen 37 und 40 der Transformatoren 35 und 36 sind an ein Energieversorgungsnetz 34, in diesem Fall ein Mittelspannungsnetz, angeschlossen. In der beispielhaften Ausgestaltung sind die Primärwicklungen 37 und 40 in extended Delta und die Sekundärwicklungen 38, 39, 41 und 42 im Stern verschaltet. Die beiden Dreiwicklertransformatoren 35 und 36 können auch durch vier Zweiwicklertransformatoren ersetzt werden. Die Ausgänge der Sekundärwicklungen 38, 39, 41 und 42 sind je mit einem dreiphasigen Gleichstromzweig 45, 46, 47 und 48 verschaltet. Die Gleichstromzweige 45, 46, 47 und 48 weisen je einen Gleichrichter auf, wie er in Figur 1 beschrieben ist. Jeder Gleichstromzweig weist je zwei Brückenhälften 55 und 56, 58 und 59, 52 und 53 bzw. 61 und 62 mit Halbleitern (Thyristoren) sowie je eine Drosselspule 51, 54, 57 bzw. 60 auf. Die Gleichstromzweige 45, 46, 47 und 48 sind in einem Gleichstromkreis 64 parallelgeschaltet. Dabei lassen sich je zwei Gleichstromzweige 45 und 46 bzw. 47 und 48 zu sechspulsig wirkenden Gleichstromzweigen 43 bzw. 44 zusammenfassen.

Die Steuerwinkel des ersten dreipulsigen Gleichstromkreises 46 des ersten sechspulsigen Gleichstromkreises 43 sind $\alpha_{11a}$ und $\alpha_{12a}$, die Steuerwinkel des zweiten dreipulsigen Gleichstromkreises 45 des ersten sechspulsigen Gleichstromkreises 43 sind $\alpha_{12b}$ und $\alpha_{11b}$, die Steuerwinkel des ersten dreipulsigen Gleichstromkreises 47 des zweiten sechspulsigen Gleichstromkreises 44 sind $\alpha_{21a}$ und $\alpha_{22a}$ und die Steuerwinkel des zweiten dreipulsigen Gleichstromkreises 48 des zweiten sechspulsigen Gleichstromkreises 44 sind $\alpha_{22b}$ und $\alpha_{21b}$, $\alpha_{11a}$ und $\alpha_{11b}$, $\alpha_{12a}$ und $\alpha_{12b}$, $\alpha_{21a}$ und $\alpha_{21b}$ sowie $\alpha_{22a}$ und $\alpha_{22b}$ sind in der Theorie identisch, werden aber in der Praxis geringfügig unterschiedlich eingestellt, um die Teilgleichströme in den Brücken gleich zu halten. Ferner werden die Steuerwinkel derartig eingestellt, daß $\alpha_{11a}$ ungefähr gleich $\alpha_{11b}$ ungefähr gleich $\alpha_{21a}$ ungefähr gleich $\alpha_{21b}$ und $\alpha_{12a}$ ungefähr gleich $\alpha_{12b}$ ungefähr gleich $\alpha_{22a}$ ungefähr gleich $\alpha_{22b}$ ist. Durch diese Einstellung der Steuerwinkel sind die beiden dreipulsigen Gleichstromkreise 45 und 46 bzw. 47 und 48 der sechspulsigen Gleichstromkreise 43 bzw. 44 um je 180° phasenverschoben.

Die Primärwicklungen 37 und 40 der Transformatoren 35 und 36 sind gegeneinander um 30° phasenverschoben, was zu einer Phasenverschiebung von 30° der sechspulsigen Gleichstromzweige 43 und 44 führt. Durch diese 30° Phasenverschiebung der sechspulsigen Gleichstromkreise 43 bzw. 44 ergibt ihre Parallelschaltung einen zwölfpulsigen Gleichstromkreis 64. Durch diese Ausführungsform werden nicht nur die 2. und 4. - wie bei einem sechspulsigen Gleichrichter -, sondern auch die 5. und 7. Harmonische der Versorgungsspannung des Energieversorgungsnetzes 34 unterdrückt, so daß diese Ausführungsform für besonders hohe Leistungen geeignet ist. Ein weiterer Vorteil der zwölfpulsigen Variante der erfindungsgemäßen Einrichtung zur Gleichstromversorgung ist, daß sie bei Ausfall eines Transformators bei verminderter Leistungsfähigkeit als sechspulsigeEinrichtung zur Gleichstromversorgung betrieben werden kann. Auf diese Weise kann der Betrieb auch bei Ausfall eines Transformators 37 oder 40 aufrechterhalten werden, was zu einer deutlichen Erhöhung der Verfügbarkeit der Einrichtung zur Gleichstromversorgung insgesamt führt. Die zwölfpulsige Variante der erfindungsgemäßen Einrichtung zur Gleichstromversorgung ist also eine besonders vorteilhafte Ausgestaltung zum Betrieb eines Lichtbogenofens 63, insbesondere für große Leistungen.

**Patentansprüche**

1. Einrichtung zur Gleichstromversorgung eines elektrischen Schmelzaggregats, insbesondere eines Lichtbogenofens, mit mindestens einem Transformator (3), dessen Primärwicklung (5) mit Drehstrom versorgt wird, und der mindestens eine Sekundärwicklung (6) aufweist, die mit mehreren Brückenzweigen (7,8,9) eines Gleichrichters (2) verschaltet ist und die Drehstrom an einen Gleichrichter (2) abgibt, der am Ausgang eine gleichgerichtete Spannung ($U_d$) und einen gleichgerichteten Strom ($I_d$) an die Last abgibt, wobei die Brückenzweige (7,8,9) für jede Sekundärwicklung (6) aus zumindest je zwei gesteuerten Halbleitern (10,11,12 und 13,14,15) je Phase aufgebaut sind, deren Steuerwinkel ($\alpha_1$, $\alpha_2$), die in funktionaler Abhängigkeit zur abgegebenen Gleichspannung ($U_d$) einerseits und der aufgenommenen Blindleistung ($Q_{soll}$) andererseits stehen, unterschiedlich steuerbar sind, wobei die Steuerwinkel ($\alpha_1$, $\alpha_2$) in einer Recheneinheit gemäß den Beziehungen

$$U_d = \frac{1,35}{2}\, U_L\, (\cos \alpha_1 + \cos \alpha_2) \qquad (1)$$

$$\frac{Q_{soll}}{1,35\, U_L \cdot I_d} = \frac{Q_{soll,rel}}{100\%} \approx \frac{1}{2}\, (\sin \alpha_1 + \sin \alpha_2) \qquad (2)$$

mit

$U_d \triangleq$     abgegebene Gleichspannung

$U_L \triangleq$     Spannung zwischen je zwei Phasen

$I_d \triangleq$     erzeugter Gleichstrom

$Q_{soll} \triangleq$     aufgenommene Blindleistung

$Q_{soll,rel} \triangleq$     relativer Sollanteil der Blindleistung in Prozent bezogen auf die ideale Stromrichterleistung

bestimmbar sind und wobei die Größen, die die durch den Schmelzvorgang bedingten Impedanzschwankungen im Schmelzaggregat repräsentieren, derartig einstellbar sind, daß ohne zusätzlichen Freilaufkreis zumindest die aufgenommene Blindleistung in etwa konstant ist.

2. Einrichtung zur Gleichstromversorgung nach Anspruch 1, wobei der Gleichrichter (2) sechspulsig wirkend ausgebildet ist und zwei parallelgeschaltete, vorzugsweise baugleiche, dreipulsige Gleichstromkreise aufweist, wobei die Steuerwinkel ($\alpha_{11}$ und $\alpha_{12}$) des einen dreipulsigen Gleichstromkreises und die Steuerwinkel ($\alpha_{21}$ und $\alpha_{22}$) des anderen dreipulsigen Gleichstromkreises derartig ausgebildet sind, daß die aufgenommene Blindleistung in etwa konstant ist und die Pulse der dreipulsigen Gleichstromkreise um 180° phasenverschoben sind.

3. Einrichtung zur Gleichstromversorgung nach Anspruch 1, wobei der Gleichrichter zwölfpulsig wirkend ausgebildet ist und parallelgeschaltete, vorzugsweise baugleiche, sechspulsige Gleichstromkreise (43,44) aufweist, von denen wiederum jeder je zwei, vorzugsweise baugleiche, dreipulsige Gleichstromkreise (45,46 bzw. 47,48) aufweist, wobei der erste dreipulsige Gleichstromkreis (46) des ersten sechspulsigen Gleichstromkreises (43) mit den Steuerwinkeln ($\alpha_{11a}$ und $\alpha_{12a}$), der zweite dreipulsige Gleichstromkreis (45) des ersten sechspulsigen Gleichstromkreises (43) mit den Steuerwinkeln ($\alpha_{12b}$ und $\alpha_{11b}$), der erste dreipulsige Gleichstromkreis (47) des zweiten sechspulsigen Gleichstromkreises (44) mit den Steuerwinkeln ($\alpha_{21a}$ und $\alpha_{22a}$) und der zweite dreipulsige Gleichstromkreis (48) des zweiten sechspulsigen Gleichstromkreises (44) mit den Steuerwinkeln ($\alpha_{22b}$ und $\alpha_{21b}$) angesteuert wird, und wobei die Steuerwinkel ($\alpha_{11a}$ und $\alpha_{12a}$, $\alpha_{11b}$ und $\alpha_{12b}$) des ersten sechspulsigen Gleichstromkreises (43) und die Steuerwinkel ($\alpha_{21a}$, $\alpha_{22a}$, $\alpha_{21b}$ und $\alpha_{22b}$) des zweiten sechspulsigen Gleichstromkreises (44) derartig ausgebildet sind, daß die aufgenommene Blindleistung des Gleichstromkreises annähernd konstant ist.

4. Einrichtung zur Gleichstromversorgung nach Anspruch 3, wobei zwei Transformatoren (35, 36) vorhanden sind und wobei die beiden Transformatoren (35, 36) zur Drehstromversorgung um 30° gegeneinander phasenverschoben ausgebildet sind.

5. Einrichtung zur Gleichstromversorgung nach Anspruch 3, wobei der zwölfpulsig wirkende Gleichrichter als sechspulsig wirkend betreibbar ist.

6. Einrichtung zur Gleichstromversorgung nach Anspruch 1, wobei die Recheneinheit als Einchip-Rechner, z.B. als Mikrocontroller, oder als Mehrchip-Rechner, insbesondere als Einplatinenrechner oder Automatisierungsgerät, wie z.B. eine speicherprogrammierbare Steuerung, ein VME-Bussystem oder ein Industrie-PC, ausgebildet ist.

7. Einrichtung zur Gleichstromversorgung nach Anspruch 6, wobei die Recheneinheit als hochverfügbare Recheneinheit, z.B. mit redundanter Architektur, ausgebildet ist.

8. Einrichtung zur Gleichstromversorgung nach einem der vorhergehenden Ansprüche, wobei die variablen Steuerwinkel ($\alpha_1$, $\alpha_2$) on-line nachregelbar sind.

9. Einrichtung zur Gleichstromversorgung nach einem der vorhergehenden Ansprüche, wobei die Blindleistung für einen ausgewählten Gleichstrom in einem Gleichspannungsbereich zwischen 40 und 80 % der Leerlaufgleichspannung, insbesondere zwischen 50 und 70 %, konstant haltbar ist.

**Claims**

1. Device for direct-current supply of an electrical melting unit, in particular an arc furnace, having at least one transformer (3), the primary winding (5) of which is supplied with three-phase current and which transformer has at least one secondary winding (6), which is connected up to a plurality of bridge branches (7,8,9) of a rectifier (2) and which outputs three-phase current to a rectifier (2), which outputs at the output a rectified voltage ($U_d$) and a rectified current ($I_d$) to the load, the bridge branches (7,8,9) for each secondary winding (6) being constructed from at least two controlled semiconductors (10,11,12 and 13,14,15) each per phase, the delay angles ($\alpha_1$, $\alpha_2$) of which are differently controllable in a manner functionally dependent on the direct current ($U_d$) which is output on the one hand and the reactive power absorbed ($Q_{soll}$) on the other hand, the delay angles ($\alpha_1$, $\alpha_2$) being determinable in an arithmetic unit in accordance with the relations

$$U_d = \frac{1.35}{2} U_L(\cos\alpha_1 + \cos\alpha_2) \qquad (1)$$

$$\frac{Q_{soll}}{1.35\,U_L.I_d} = \frac{Q_{soll,rel}}{100\%} \approx \frac{1}{2}(\sin\alpha_1 + \sin\alpha_2) \qquad (2)$$

with

$U_d \triangleq$      direct voltage output

$U_L \triangleq$      voltage between each two phases

$I_d \triangleq$      direct current generated

$Q_{soll} \triangleq$      reactive power absorbed

$Q_{soll,rel} \triangleq$      relative desired component of the reactive power in percent with respect to the ideal converter power,

and wherein the variables which represent the impedance fluctuations in the melting unit that are caused by the melting process can be adjusted in such a way that, without an additional free-running circuit, at least the reactive power absorbed is substantially constant.

2. Device for direct-current supply according to claim 1, wherein the rectifier (2) is constructed so as to act in a six-pulse manner and has two preferably structurally identical triple-pulse direct-current circuits connected in parallel, the delay angles ($\alpha_{11}$ and $\alpha_{12}$) of the one triple-pulse direct-current circuit and the delay angles ($\alpha_{21}$ and $\alpha_{22}$) of the other triple-pulse direct-current circuit being constructed in such a way that the reactive power absorbed is substantially constant and the pulses of the triple-pulse direct-current circuits are in phase opposition.

3. Device for direct-current supply according to claim 1, wherein the rectifier is constructed so as to act in a twelve-pulse manner and has preferably structurally identical six-pulse direct-current circuits (43, 44) connected in parallel, each of which in turn has two preferably structurally identical triple-pulse direct-current circuits (45, 46 and 47, 48 respectively), the first triple-pulse direct-current circuit (46) of the first six-pulse direct-current circuit (43) being triggered with the delay angles ($\alpha_{11a}$ and $\alpha_{12a}$), the second triple-pulse direct-current circuit (45) of the first six-pulse direct-current circuit (43) being triggered with the delay angles ($\alpha_{12b}$ and $\alpha_{11b}$), the first triple-pulse direct-current circuit (47) of the second six-pulse direct-current circuit (44) being triggered with the delay angles ($\alpha_{21a}$ and $\alpha_{22a}$) and the second triple-pulse direct-current circuit (48) of the second six-pulse direct-current circuit (44) being triggered with the delay angles ($\alpha_{22b}$ and $\alpha_{21b}$), and wherein the delay angles ($\alpha_{11a}$ and $\alpha_{12a}$, $\alpha_{11b}$ and $\alpha_{12b}$) of the first six-pulse direct-current circuit (43) and the delay angles ($\alpha_{21a}$, $\alpha_{22a}$, $\alpha_{21b}$ and $\alpha_{22b}$) of the second six-pulse direct-current circuit (44) are constructed in such a way that the reactive power absorbed of the direct-current circuit is substantially constant.

4. Device for direct-current supply according to claim 3, wherein there are two transformers (35, 36) and wherein the two transformers (35, 36) are, for the supply of three-phase current, constructed such that they are by 30° out of phase with respect to each other.

5. Device for direct-current supply according to claim 3, wherein the rectifier which acts in a twelve-pulse manner can be operated so that it acts in a six-pulse manner.

6. Device for direct-current supply according to claim 1, wherein the arithmetic unit is constructed as a single-chip computer, for example as a microcontroller, or as a multi-chip computer, in particular as a single-board computer or automation device, such, for example, a programmable controller, a VME bus system or an industrial PC.

7. Device for direct-current supply according to claim 6, wherein the arithmetic unit is constructed as a high-availability arithmetic unit, for example with redundant architecture.

8. Device for direct-current supply according to one of the preceding claims, wherein the variable delay angles ($\alpha_1$, $\alpha_2$) can be corrected on-line.

9. Device for direct-current supply according to one of the preceding claims, wherein the reactive power for a selected direct current can be kept constant in a direct-voltage range between 40 and 80% of the no-load direct voltage, in particular between 50 and 70%.

**Revendications**

1. Dispositif d'alimentation en courant continu d'une installation électrique de fusion, notamment d'un four à arc électrique, comportant au moins un transformateur (3) dont l'enroulement (5) primaire est alimenté en courant triphasé et dont le au moins un enroulement (6) secondaire, qui est relié à plusieurs branches (7, 8, 9) de pont d'un redresseur (2) et qui fournit le courant triphasé à un redresseur (2) qui fournit à la sortie une tension ($U_d$) redressée et un courant ($I_d$) redressé à la charge, les branches (7, 8, 9) de pont étant constituées pour chaque enroulement (6) secondaire, par phase, d'au moins chaque fois deux semi-conducteurs (10, 11, 12 et 13, 14, 15) commandés dont les angles ($\alpha_1$, $\alpha_2$) de commande, qui sont en dépendance fonctionnelle avec la tension ($U_d$) continue fournie d'une part et avec la puissance ($Q_{soll}$) réactive reçue, d'autre part, pouvant être commandés différemment, les angles ($\alpha_1$, $\alpha_2$) de commande pouvant être déterminés dans une unité de calcul suivant les relations

$$U_d = \frac{1,35}{2} U_L (\cos \alpha_1 + \cos \alpha_2) \qquad (1)$$

$$\frac{Q_{soll}}{1,35\,U_L \cdot I_d} = \frac{Q_{soll,rel}}{100\%} \approx \frac{1}{2}(\sin \alpha_1 + \sin \alpha_2) \qquad (2)$$

avec

$U_d \cong$ tension continue fournie

$U_L \cong$ tension entre chaque fois deux phases

$I_d \cong$ courant continu produit

$Q_{soll} \cong$ puissance réactive reçue

$Q_{soll,rel} \cong$ composante de consigne relative de la puissance réactive en pour cent rapportée à la puissance idéale de convertisseur

et les grandeurs qui représentent les fluctuations d'impédance dans l'installation de fusion, dues à l'opération de fusion, pouvant être réglées de telle manière qu'au moins la puissance réactive reçue est à peu près constante sans circuit de roue libre supplémentaire.

2. Dispositif d'alimentation en courant continu suivant la revendication 1, le redresseur (2) étant réalisé à six impulsions et comportant deux circuits de courant continu à trois impulsions, branchés en parallèle, de préférence de même construction, les angles ($\alpha_{11}$ et $\alpha_{12}$) de commande de l'un des circuits de courant continu à trois impulsions et les angles ($\alpha_{21}$ et $\alpha_{22}$) de commande de l'autre circuit de courant continu à trois impulsions étant réalisés de telle manière que la puissance réactive reçue est à peu près constante et que les impulsions de courant continu à trois impulsions sont déphasées de 180°.

3. Dispositif d'alimentation en courant continu suivant la revendication 1, le redresseur étant réalisé à douze impulsions et comportant deux circuits (43, 44) de courant continu à six impulsions, branchés en parallèle, de préférence de même construction, dont à nouveau chacun comporte chaque fois deux circuits (45, 46 et 47, 48) de courant continu à trois impulsions, de préférence de même construction, le premier circuit (46) de courant continu à trois impulsions du premier circuit (43) de courant continu à six impulsions étant commandé par les angles ($\alpha_{11a}$ et $\alpha_{12a}$) de commande, le deuxième circuit (45) de courant continu à trois impulsions du premier circuit (43) de courant continu à six impulsions étant commandé par les angles ($\alpha_{12b}$ et $\alpha_{11b}$) de commande, le premier circuit (47) de courant continu à trois impulsions du deuxième circuit (44) de courant continu à six impulsions étant commandé par les angles ($\alpha_{21a}$ et $\alpha_{22a}$) de commande et le deuxième circuit (48) de courant continu à trois impulsions du deuxième circuit (44) de courant continu à six impulsions étant commandé par les angles ($\alpha_{22b}$ et $\alpha_{21b}$) de commande, et les angles ($\alpha_{11a}$ et $\alpha_{12a}$, $\alpha_{11b}$ et $\alpha_{12b}$) de commande du premier circuit (43) de courant continu à six impulsions et les angles ($\alpha_{21a}$ et $\alpha_{22a}$, $\alpha_{21b}$ et $\alpha_{22b}$) de commande du deuxième circuit (44) de courant continu à six impulsions étant réalisés de telle manière que la puissance réactive reçue du circuit de courant continu est à peu près constante.

4. Dispositif d'alimentation en courant continu suivant la revendication 3, deux transformateurs (35, 36) étant présents et les deux transformateurs (35, 36) étant réalisés de manière à être déphasés de 30° l'un par rapport à l'autre en vue de l'alimentation en courant triphasé.

5. Dispositif d'alimentation en courant continu suivant la revendication 3, le redresseur à douze impulsions pouvant fonctionner à six impulsions.

6. Dispositif d'alimentation en courant continu suivant la revendication 1, l'unité de calcul étant réalisée en ordinateur à une puce, par exemple en microcontrôleur, ou en ordinateur multipuce, notamment en ordinateur à une platine ou en appareil d'automatisation, comme par exemple en une commande à mémoire programmable, un système de bus VME ou un ordinateur personnel industriel.

7. Dispositif d'alimentation en courant continu suivant la revendication 6, l'unité de calcul étant réalisée en unité de calcul de grande disponibilité, par exemple à architecture redondante.

8. Dispositif d'alimentation en courant continu suivant l'une des revendications précédentes, les angles ($\alpha_1$, $\alpha_2$) de commande variables pouvant être rerégulés en ligne.

9. Dispositif d'alimentation en courant continu suivant l'une des revendications précédentes, la puissance réactive pouvant être maintenue constante pour un courant continu sélectionné dans un intervalle de tension continue entre 40 et 80% de la tension continue en fonctionnement à vide, notamment entre 50 et 70%.

FIG 1

FIG 2

FIG 3